(19) Europäisches Patentamt
European Patent Office
Office européen des brevets

(11) **EP 2 383 487 A1**

(12) **EUROPÄISCHE PATENTANMELDUNG**

(43) Veröffentlichungstag:
**02.11.2011 Patentblatt 2011/44**

(51) Int Cl.:
***F16F 13/06*** *(2006.01)*

(21) Anmeldenummer: **10004549.1**

(22) Anmeldetag: **30.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **Carl Freudenberg KG**
**69469 Weinheim (DE)**

(72) Erfinder:
• **Erl, Andreas**
**16761 Hennigsdorf (DE)**
• **Hack, Rüdiger**
**10713 Berlin (DE)**
• **Selent, Fabian**
**16761 Hennigsdorf (DE)**

(54) **Hydraulisch dämpfendes Lager**

(57) Die vorliegende Erfindung betrifft ein hydraulisch dämpfendes Lager (10), mit einer Dämpfungsflüssigkeit (15), welche eine komplexe Viskosität aufweist, die in einem ersten Frequenzbereich, in dem die Dämpfungsflüssigkeit (15) bei einer Betätigung des Lagers (10) angeregt wird, oberhalb der komplexen Viskosität von Polydimethylsiloxan und die in einem zweiten Frequenzbereich, in dem die Dämpfungsflüssigkeit (15) bei einer Betätigung des Lagers (10) angeregt wird, unterhalb der komplexen Viskosität von Polydimethylsiloxan liegt.

Fig. 3

EP 2 383 487 A1

**Beschreibung**

Technisches Gebiet

Die vorliegende Erfindung betrifft ein hydraulisch dämpfendes Lager.

Stand der Technik

Solche Lager werden eingesetzt, um Schwingungen zu isolieren oder zu dämpfen und die Geräuschbelastung zu senken. Typische Einsatzfälle sind die Lagerung von Kabinen, Motoren, Getrieben, allgemeinen Maschinen, Aggregaten und Vorrichtungen.

Der Einmassenschwinger mit einem Bewegungsfreiheitsgrad ist ein Modell für die Behandlung der technischen Aufgabenstellungen bei der optimalen Auswahl der Lager für einen konkreten Einsatzfall. Auf dieses Modell wird nachfolgend immer wieder Bezug genommen.

In diesem Zusammenhang können die mit einer Lagerung verbundenen Zielkonflikte sehr gut anhand der Wegvergrößerungsfunktion des Einmassenschwingers bei Wegerregung an der Stütze und der Wegvergrößerung an der aufgelagerten Masse dargestellt werden.

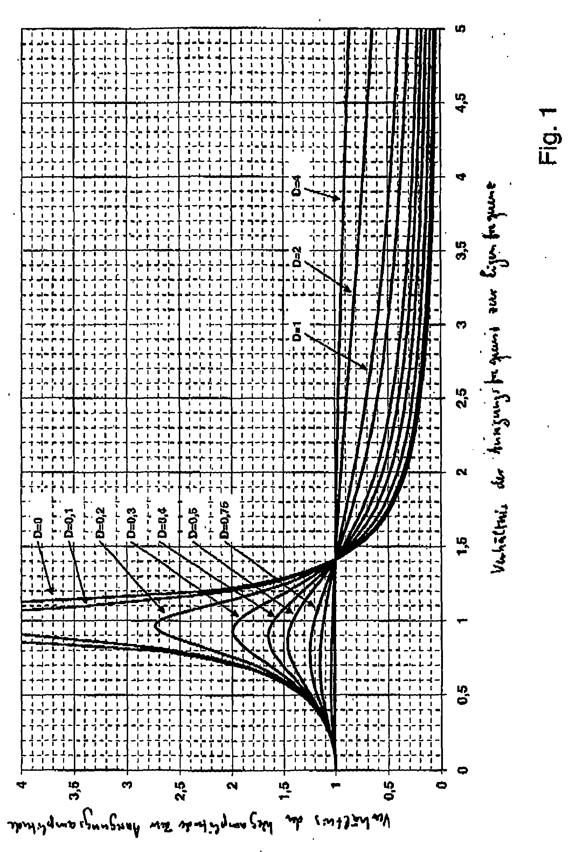

Bei periodischer Anregung kann das Verhältnis der Anregungsfrequenz zur Eigenfrequenz anhand der Vergrößerungsfunktion in Bereiche unterteilt werden. Beträgt das Frequenzverhältnis kleiner der Quadratwurzel aus 2 ($\sqrt{2}$), dann ist die Wegamplitude an der Masse gleich oder größer der Anregungsamplitude an der Stütze, siehe Fig. 1. Bei einem Frequenzverhältnis größer $\sqrt{2}$ kann eine Wegamplitude an der Masse festgestellt werden, die kleiner als die Anregungsamplitude ist.

In der Praxis werden Abstimmungsverhältnisse der Anregungsfrequenz zur Eigenfrequenz größer 2, besser ca. 3 und größer angestrebt. Dadurch kann die Wegamplitude an der Masse häufig in ausreichender Weise gegenüber der Anregungsamplitude verkleinert werden.

Wird an der Stütze eine Wegauslenkung in Form eines Rechteckimpulses vorgenommen, dann tritt als Folge eine Schwingung der Masse in der Eigenfrequenz des Einmassenschwingers auf. Mit zunehmendem Dämpfungsgrad in der entsprechenden Vergrößerungsfunktion des Einmassenschwingers bei Stützenerregung verkleinert sich die Überhöhung der Wegamplitude an der Masse.

Treten in einer schwingungstechnischen Lagerung z.B. periodische Anregungen an der Stütze oder stattdessen impulsförmige Wegauslenkungen (z.B. Rechteckimpuls) auf, dann besteht ein erster Zielkonflikt. Dieser besteht darin, dass ein großer Dämpfungsgrad bei impulsförmiger Weganregung zu einer geringen Vergrößerung der Antwortamplitude der schwingenden Masse führt, gleichzeitig aber bei sonst günstiger Wahl des Abstimmungsverhältnisses aus der Eigenfrequenz zur Anregungsfrequenz zu einer größeren Wegamplitude an der aufgelagerten Masse bei periodischer Anregung führt. Dem kann mit einem Lager begegnet werden, welches ein frequenzabhängiges Dämpfungsverhalten zeigt.

Neben dem bereits eingeführten Zielkonflikt gibt es einen weiteren. Dieser besteht in unterschiedlichen Anforderungen an das Lagerelement, wie auch die Lagerung bei großamplitudigen Schwingungen der aufgelagerten Masse im Gegensatz zu strukurelastischen Schwingungen von Teilen der aufgelagerten Masse, des Lagers, wie auch der Stütze relativ zu anderen Teilen der selben Objekte oder der damit wirkungsverbundenen anderen Objekte in der Lagerung.

Konkret besteht bei einer Kabinenlagerung der Wunsch mögliche große Amplituden dieser zum Rahmen mithilfe des verbindenden Lagerelements einzuschränken. Hierfür ist eine der schwingungsfähigen Kabinenmasse angepasste Dämpfung zu wählen. Anhaltspunkte geben die Zusammenhänge, dass die Dämpfungskonstante proportional der Quadratwurzel aus der Masse ist, gleichzeitig aber die Eigenkreisfrequenz des Einmassenschwingers proportional zur Quadratwurzel aus dem Kehrwert der Masse ist. Dies gilt für eine konstante Steifigkeit im betrachteten Frequenzbereich.

Gleichzeitig besteht das Phänomen, dass die aufgelagerte Masse, das Lager, wie auch die Stütze in der Praxis zu strukurelastischen Schwingungen fähig sind. Diese führen in aller Regel, nach entsprechender Anregung, zu einer feststellbaren Geräuschabstrahlung. Störend sind häufig solche, die vom Lager wie auch der aufgelagerten Masse ausgehen.

Bei derartigen Schwingungen ist die jeweils beteiligte Masse nur anteilig an der Gesamtmasse der in der Lagerung wirkverbundenen Objekte anzusetzen. Die Schwingungsamplituden strukturelastischer Schwingungen sind um Größenordnungen kleiner als die z.B. einer Kabine als Starrkörper in der hier betrachteten Kabinenlagerung. Daraus resultiert der Wunsch nach einer diesem Sachverhalt angepassten Dämpfung.

Großamplitudige Wegauslenkungen an der Stütze sollen hier solche sein, welche zu einer Bewegung der gesamten Masse relativ zur Stutze führen, kleinamplitudige hingegen solche, welche dazu führen, dass sich z.B. nur Teile der Kabine relativ zu anderen Teilen der Kabine bewegen, die strukturelastischen Schwingungen. Der Übergang dabei ist fließend. Daher sollte eine zu wählende Dämpfung nicht schalterartig unterschiedliche Beträge annehmen.

Wird eine Masse nicht mehr punktförmig betrachtet, sondern räumlich ausgedehnt und auf mehreren Lagerelementen gelagert sind mehrere Bewegungsfreiheitsgrade anzusetzen. Dann zeigen sich je nach Lagerung, Lagerelementen und Anregungen resonante Amplitudenvergrößerungen in der jeweiligen Bewegungskoordinate, die unterhalb, in der oder auch oberhalb der Hubeigenfrequenz der aufgelagerten Masse liegen. Dies führt zu einem weiteren Zielkonflikt bei der Wahl der angemessenen Dämpfung und der Steifigkeit der Feder des Lagerelements. Angeführt sei hier das Beispiel einer Kabine abgestützt auf vier Lagerelementen gegenüber dem Rahmen eines betreffenden Fahrzeugs. Dies gilt bei konstanter Steifigkeit über den betrachteten Frequenzbereich.

Der ideale Einmassenschwinger mit einem Bewegungsfreiheitsgrad, masseloser Feder und konstanter Dämpfung ist in der Praxis gut für die näherungsweise Behandlung der sogenannten Starrkörperschwingungen geeignet. Den strukturelastischen Schwingungen kann in erster Nährung ein Einmassenschwinger mit einem Bewegungsfreiheitsgrad, massebehafteter Feder und konstanter Dämpfung Rechnung tragen. Dabei zeigen sich in der eingeführten Vergrößerungsfunktion Nebenmaxima bei höheren Frequenzen als der einen Eigenfrequenz bei masseloser Feder.

Gemäß der Vorstellung der strukturelastischen Schwingungen bewegen sich Teile des Volumens einer Komponente eines elastischen, ausgedehnten, massebehafteten Körpers gegenüber benachbarten Teilen derselben Komponente. Gleiches gilt sinngemäß für benachbarte Teiloberflächen der Gesamtoberfläche einer zu betrachtenden Komponente.

Hier gilt es eine Abgrenzung vorzunehmen, soll aus diesen vielfältigen messbaren Effekten und Zusammenhängen auf die Anforderungen an das Lager geschlossen werden. Dafür soll die Kenntnis der Überhöhung der Schwingungsamplitude am Auflager und/oder am Traglager des Lagers herangezogen werden.

Der Gesamtverlauf der Schwingungsamplitude gemessen am Auflager oder am Traglager über der Anregungsfrequenz lässt sich prinzipiell dann gut durch repräsentierende Einmassenschwinger behandeln, wenn es deutlich ausgezeichnete, voneinander beabstandete Maxima, gibt. Dies ist bevorzugt bei kleinen Dämpfungen der Fall.

Sollen diese Maximalausschläge reduziert werden, kann sinngemäß die Kenntnis der Einmassenschwinger mit einem Bewegungsfreiheitsgrad und masseloser Feder darauf angewendet werden und z.B. die Dämpfung erhöht werden, vorausgesetzt, ein Lagerelement lässt sich entsprechend den Anforderungen aus diesen Maxima und zugehörigen Zielen gestalten.

Nicht in allen Fällen gelingt eine Anpassung des Abstimmungsverhältnisses aus der Eigenfrequenz zur Anregungsfrequenz in der Bewegungskoordinate größer 2, besser ca. 3 für alle Eigenfrequenzen und eine Dämpfungswahl, welche beste Isolation ermöglicht.

Ist die Dämpfungskonstante über den gesamten Frequenzbereich der feststellbaren Vergrößerungsfunktion konstant ergibt sich ein umfassender Zielkonflikt bei der Behandlung des Einmassenschwingers bei Stützenerregung mittels Wegauslenkung bei impulsförmigen Anregungen bzw. periodischen Anregungen bei kleiner oder größerer Wegauslenkung.

Im Kompromiss ist hier deshalb oft nur die Wahl der passenden-Dämpfung möglich. Aus der Theorie der Einmassenschwinger lässt sich ableiten, wie in der Literatur vielfach gezeigt, dass Dämpfungsgrade dann nicht beliebig gewählt werden sollten. Empfehlenswert sind Dämpfungsgrade D=....0,2 ...0,5...auszuwählen

Davon kann in der Praxis abgewichen werden, wenn das Lagerelement nicht mit ausreichender Genauigkeit mit dem idealen Einmassenschwinger in Übereinstimmung gebracht werden kann.

In vielen praktischen Fällen sind die bekannten Empfehlungen allerdings ohne weiteres zutreffend.

Für die Gestaltung eines Lagerelements sind dessen Eigenschaften in reproduzierbaren Beziehungen aus Anregung und Antwort darzustellen. Häufig werden dafür Berechnungen und Messungen in einer Bewegungskoordinate herangezogen. In der Konzeptionsphase muss durchaus auf qualitative Beziehungen zwischen verschiedenen physikalischen Sachverhalten zurückgegriffen werden.

Des Weiteren zeigt sich, dass für die Lösung der zu behandelnden Zielkonflikte in einer Eigenschaftserfassung des Lagerelements zwischen der Abhängigkeit von der Anregungsamplitude und der Anregungsfrequenz unterschieden werden sollte.

Im ersten Schritt ist es durchaus ausreichend die Lagereigenschaften bis zu einer Frequenz zu erfassen, welche bis mindestens zur größten Starrkörperfrequenz in der Lagerung reicht.

Zunehmend ist aber auch die Berücksichtungen der Geräuschabstrahlung in einer Lagerung bedeutsam. Hierfür sind auch die strukturelastischen Schwingungen des Lagers in die Lagerelementgestaltung einzubeziehen. Stehen bei diesen Schwingungen des Lagers sich relativ bewegende Teiloberflächen einzelner Komponenten des Lagerelements in direktem Kontakt mit dem Fluidvolumen innerhalb des Lagers und resultiert aus dieser Bewegung ein verlustbehafteter Volumenstrom, kann die Wegamplitude dieser Relativbewegung verringert werden. Dies ist insbesondere interessant für die Elastomergeometrie, welche das Auflager mit dem Traglager verbindet. Dies wirkt sich in mittelbarer Folge günstig auf die mögliche Geräuschabstrahlung z.B. in einer Kabine eines Fahrzeugs aus.

Diesen Vorüberlegungen folgend wurde das Lagerelement gemäß DE 2005 021 498 U1 gestaltet. Der Gegenstand dieser Druckschrift ist von der vorliegenden Anmeldung vollständig mit umfasst, wird der Kürze halber aber nachfolgend nur auszugsweise wiedergegeben.

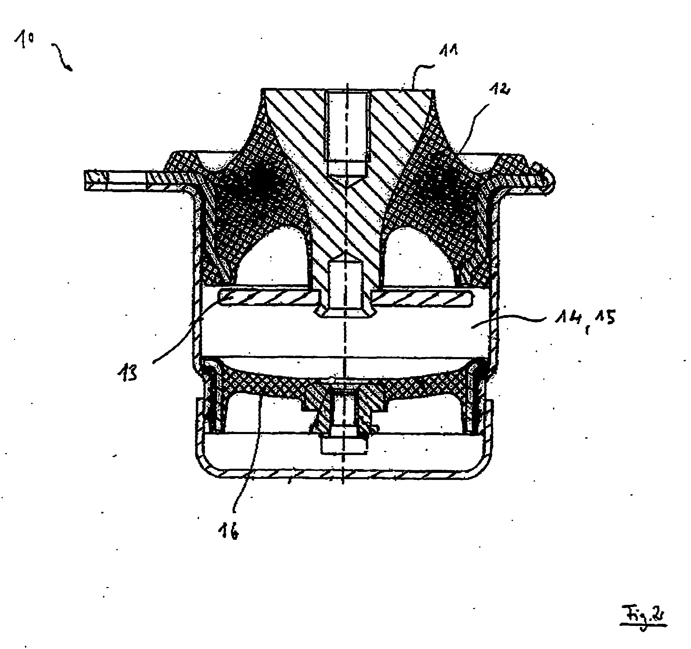

Es löst den angesprochenen umfassenden Zielkonflikt bereits teilweise und ist in Fig. 2 dargestellt.

Das Lager 10 weist ein Auflager 11 auf, an welchem die aufzulagemde Masse zu befestigen ist. Das Auflager 11 ist über einen Federkörper 12 mit einem Traglager 13 verbunden.

Das Lager 10 weist ferner einen Raum 14 auf, welcher mit einer Dämpfungsflüs-sigkeit 15 befült ist. An dem Auflager 11 ist eine Planscherscheibe 13 angebracht, welche bei einer Betätigung des Lagers 10 mit der Dämpfungsflüssigkeit 15 wech-selwirkt. Der mit der Dämpfungsflüssigkeit 15 befüllte Raum wird abschnittsweise von einer elastischen Membran 16 begrenzt.

Die Dämpfungsflüssigkeit 15 ist typischerweise Polydimethylsiloxan (Silikonöl), welches in Abhängigkeit von der Anregungsfrequenz seine Viskosität ändert.

Für die Ausbildung wichtiger schwingungstechnischer Eigenschaften des hydraulisch dämpfenden Lagers ist es erforderlich, dass Relativbewegungen des Auflagers zum Traglager zu einem verlustbehafteten Volumenstrom - unter Wechselwirkung mit der Membran und dem Elastomer, welches Auflager und Traglager verbindet - innerhalb des Lagers führen.

In der Praxis hat sich jedoch herausgestellt, dass die Viskosität von Polydimethyl-siloxan bei Frequenzverhältnissen unterhalb von √2 des Einmassenschwingers in einigen Applikationen zu niedrig ist und bei Frequenzverhältnissen oberhalb von √2 des Einmassenschwingers geringer sein sollte.

Darstellung der Erfindung

Der Erfindung liegt die Aufgabe zugrunde, ein hydraulisch dämpfendes Lager bereitzustellen, das die oben genannten Nachteile überwindet. Das Lager soll verbesserte Dämpfungs- und Schwingungseigenschaften aufweisen. Es wurde insbesondere nach einer Dämpfungsflüssigkeit gesucht, die mit der spezifischen Dämpfungsarbeit des Lagers in eine qualitative Übereinstimmung gebracht werden kann.

Gegenstand der Erfindung

Demgemäß wird ein Lager mit den Merkmalen des Patentanspruchs 1 bereitgestellt.

Dieses hydraulisch dämpfende Lager umfasst eine Dämpfungsflüssigkeit, welche eine komplexe Viskosität aufweist, die in einem ersten Frequenzbereich, in dem die Dämpfungsflüssigkeit bei einer Betätigung des Lagers angeregt wird, oberhalb der komplexen Viskosität von Polydimethylsiloxan und die in einem zweiten Frequenzbereich, in dem die Dämpfungsflüssigkeit bei einer Betätigung des Lagers angeregt wird, unterhalb der komplexen Viskosität von Polydimethylsiloxan liegt.

Die komplexe Viskosität wird dabei in einem Rheometer gemäß der DIN 53019 ermittelt. In dem Rheometer wird bei definierter Spaltweite eine Kegelform gegen eine Platte periodisch verdreht, mit dazwischen befindlichem Fluid. Während der Messung wird die Amplitude der periodischen Rotationsbewegung konstant gehalten. Die Messung wird isotherm durchgeführt.

Das Polydimethylsiloxan hat bei Standardbedingungen (20 Grad Celsius) bevorzugt eine Viskosität von ca. 100.000 mPas bei einer Anzahl von ca. 1392 Zwischengliedern.

Aus den Unteransprüchen ergeben sich vorteilhafte Weiterbildungen der Erfindung.

In Auswertung der Messergebnisse wurde gefunden, dass sich die komplexe Viskosität der Dämpfungsflüssigkeit mit der nachfolgenden Gleichung beschreiben lassen soll, in für praktische Fälle ausreichender Genauigkeit:

$$\eta(f) = \frac{a}{(1+b\cdot f)^c} + \frac{(1+d\cdot f)^e}{g}$$

Basierend auf der oberhalb angegebenen Näherungsformel für die komplexe Viskosität kann in doppeltlogarithmischer Auftragung folgendes beschrieben werden

1) ein Bereich konstanter komplexer Viskosität, Betragswert a, beginnend bei der Anregungsfrequenz 0,01 Hz;
2) gefolgt von einem zweiten Bereich geringerer komplexer Viskosität, Betragswert kleiner als a, mit einem ausgezeichneten Minimum
3) gefolgt von einem Bereich mit einem Betrag der komplexen Viskosität der über dem Betrag der komplexen Viskosität des ersten Bereichs liegt, Betragswert größer als a, bis zur Anregungsfrequenz 100 Hz.

Gemäß den angeführten Überlegungen wird ein hydraulisch dämpfendes Lager gemäß DE 2005 021 498 U1 gebildet, welches jedoch eine Dämpfungsflüssigkeit verwendet, die kein reines Polydimethysiloxan ist, sondern Beimengungen aufweist, oder gar ein davon völlig verschiedenes Fluid ist. Wird die Dämpfungsflüssigkeit als Polydimethysiloxan mit Beimengungen ausgebildet, kann das Polydimethysiloxan beispielsweise wenigstens 1000, weiter bevorzugt wenigstens 1300 Zwischenkettenglieder aufweisen.

Die Dämpfungsflüssigkeit zeichnet sich durch bestimmte Eigenschaften aus, welche auf Basis der angegebenen Näherungsformel ausgedrückt werden können. So soll ein Verhältnis, welches aus dem Betragswert a bezogen auf den Betragswert des ausgezeichneten Minimums im Bereich 2) gebildet wird, größer sein als bei einem reinen Polydimethysiloxan, welches einen gleichen Betragswert a der komplexen Viskosität aufweist, wie die davon verschiedene Dämpfungsflüssigkeit. Bei einem reinen Polydimethysiloxan mit einer komplexen Viskosität die bei kleinen Anregungsfrequenzen 100 Pas im Rheometer beträgt (Betragswert a gemäß Näherungsgleichung) beträgt das angesprochene Verhältnis konkret 1,7. Darüber hinaus soll das ausgezeichnete Minimum der komplexen Viskosität im Bereich 2) gleich dem Betragswert des ausgezeichneten Minimums des reinen Polydimethysiloxans ebenfalls im Bereich 2) sein, oder bevorzugt kleiner. Das angesprochene Minimum der Dämpfungsflüssigkeit sollte annähernd bei gleicher Frequenz in der gleichen Messanordnung (Rheometer) unter sonst gleichen Bedingungen aufgefunden werden können, wie das bei reinem Polydimethylsiloxan der Fall ist.

Gemäß den angeführten Grundüberlegungen bewirkt eine derart von Polydimethyldisiloxan verschiedene Dämpfungsflüssigkeit, dass die spezifische Dämpfarbeit im Lager bei kleinen Amplituden gering ist bzw. sogar geringer als in einem Lager gemäß DE 2005 021 498 U1 mit reinem Polydimethysiloxan als Dämpfungsmedium.

Dies geschieht in der Weise, dass sich bei kleinen Anregungsamplituden und höheren Frequenzen eine geringere spezifische Dämpfarbeit im Lager bei periodischer Anregung einstellt als mit einem Polydimethysiloxan und damit ein geringerer Widerstand gegen die Relativbewegung zwischen Auflager und Traglager einstellen lässt, was zu einer besseren Isolation führen kann. Im Umkehrschluss ist das erfindungsgemäß weitergebildete Lager in der Lage, die entsprechenden Nachteile auszugleichen. Durch Anpassung des Verlaufs der komplexen Viskosität der neuartigen Dämpfungsflüssigkeit, gemäß Definition, kann das Lager besser den Anforderungen aus einer konkreten Applikation angepasst werden. Gleichzeitig ergibt sich durch eine höhere komplexe Viskosität der definitionsgemäßen Dämpfungsflüssigkeft bei Relativbewegungen großer Amplitude und kleinen Anregungsfrequenzen ein höherer Dämpfungsgrad und damit eine größere Verkleinerung der Antwortamplitude bei entsprechender Anregung gegenüber dem Lager mit reinem Polydimethysiloxan.

Des Weiteren zeichnet sich die Dämpfungsflüssigkeit dadurch aus, dass sich ihre Eigenschaften auch durch ein komplexes Schubmodul beschreiben lassen, der sich durch Addition aus einem Verlustanteil und einem Speicheranteil zusammensetzt. Ober der Anregungsfrequenz, bei konstanter Amplitude im Rheometer ermittelt, ergibt sich insbesondere, dass der Verlustanteil lange den Speicheranteil betragsmäßig überwiegt, bis schließlich der Speicheranteil einen größeren Anteil aufweist. Bevorzugt wird dieser Wechsel bei einer Anregungsfrequenz zwischen 10 Hz und 100 Hz aufgefunden. Die komplexe Viskosität und das komplexe Schubmodul stehen insbesondere in einer betragsmäßig ermittelbarenBeziehung zueinander.

Im Nachfolgenden sollen für die Nutzung der Vorteile günstige Beträge,der Konstanten aus der Näherungsgleichung der komplexen Viskosität im Zusammenhang angegeben werden.

Beträge der Konstanten:

a soll betragen 30 Pas bis einschließlich 4000 Pas

b soll größer null sein, vorzugsweise 0,01 bis einschließlich 30

c soll betragen größer gleich null, vorzugsweise 0,1 bis einschließlich 5

d soll größer null sein, vorzugsweise 1 bis einschließlich 10

e soll größer null sein, vorzugsweise 0,01 bis einschließlich 30

g soll größer null sein, vorzugsweise 0,1 bis einschließlich 10

Das Verhältnis aus der Ausgangsviskosität aus dem Bereich 1) bezogen auf die Minimalviskosität aus dem Bereich 2) soll vorzugsweise größer gleich 1,7, bzw. vorzugsweise zwischen 1,7 und 30 sein.

Darüber hinaus soll das ausgezeichnete Minimum der komplexen Viskosität im Bereich 2) gleich dem Betragswert des ausgezeichneten Minimums des Polydimethysiloxans ebenenfalls im Bereich 2) sein, oder bevorzugt kleiner. Bevorzugt sind diese Minimalwerte kleiner oder gleich 50 Pas, kleiner gleich 70 Pas, kleiner gleich 100 Pas zu wählen.

Das angesprochene Minimum der Dämpfungsflüssigkeit sollte annähernd bei gleicher Frequenz in der gleichen Meßanordnung (Rheometer) unter sonst gleichen Bedingungen aufgefunden werden können, wie das bei reinem Polydimethylsiloxan der Fall ist.

Bevorzugt wird das Minimum in einer Rheometermessung bei konstanter Anregungsamplitude zwischen 10 Hz und 100 Hz aufgefunden.

Der Bereich 1) der komplexen Viskosität wird vorzugsweise bis 0,1 Hz, bzw. bis 1 Hz aufgefunden.

Diese Angaben basieren auf der Kenntnis von Fluiden innerhalb dieser Eigenschaftsdefinition.

Gemäß einer Weiterbildung des erfindungsgemäßen Lagers ist der zweite Frequenzbereich höherfrequenter als der erste Frequenzbereich.

Gemäß einer Weiterbildung des erfindungsgemäßen Lagers umfasst der erste Frequenzbereich Frequenzen zwischen 0 und 10 Hz und der zweite Frequenzbereich Frequenzen zwischen 10 und 70 Hz, insbesondere größer 10 und kleiner 70 Hz.

Gemäß einer Weiterbildung des erfindungsgemäßen Lagers weist die Dämpfungsflüssigkeit eine komplexe Viskosität auf, die in einem dritten Frequenzbereich, in dem diese bei einer Betätigung des Lagers angeregt wird, oberhalb der komplexen Viskosität von Polydimethylsiloxan liegt.

Gemäß einer Weiterbildung des erfindungsgemäßen Lagers ist der dritte Frequenzbereich höherfrequent als der zweite Frequenzbereich.

Gemäß einer Weiterbildung des erfindungsgemäßen Lagers umfasst der dritte Frequenzbereich Frequenzen größer 70 Hz.

Gemäß einer Weiterbildung des erfindungsgemäßen Lagers beträgt die komplexe Viskosität in dem erstern Frequenzbereich größer 100 Pas, in dem zweiten Frequenzbereich kleiner 100 Pas und/oder in dem dritten Frequenzbereich größer 100 Pas.

Gemäß einer Weiterbildung des erfindungsgemäßen Lagers sind mehrere Teilvolumina gebildet, zwischen denen die Dämpfungsflüssigkeit im Betrieb des Lagers mit unterschiedlichen Geschwindigkeiten strömt.

Gemäß einer Weiterbildung des erfindungsgemäßen Lagers sind ein Auflager und ein Traglager mittels eines Federkörpers miteinander verbunden, wobei zumindest der Federkörper und eine Membran einen mit der Dämpfungsflüssigkeit befüllten Raum begrenzen.

Die Erfindung wird nachfolgend unter Bezugnahme auf die beiliegenden Figuren der Zeichnung näher erläutert.

Es zeigen:

Fig. 1 in einem Diagramm den Verlauf des Verhältnisses der Wegamplitude zur Erregeramplitude in Abhängigkeit von der Frequenz für verschiedene Dämpfungen D bei dem bekannten Einmassenschwingermodell;

Fig. 2 einen Schnitt durch ein bekanntes hydraulisches Lager; und

Fig. 3 in einem Diagramm den Verlauf der komplexen Viskosität für reines Polydimethylsiloxan B und für die erfindungsgemäße Dämpfungsflüssigkeit A in Abhängigkeit von der Anregungsfrequenz gemäß einem Ausführungsbeispiel der vorliegenden Erfindung.

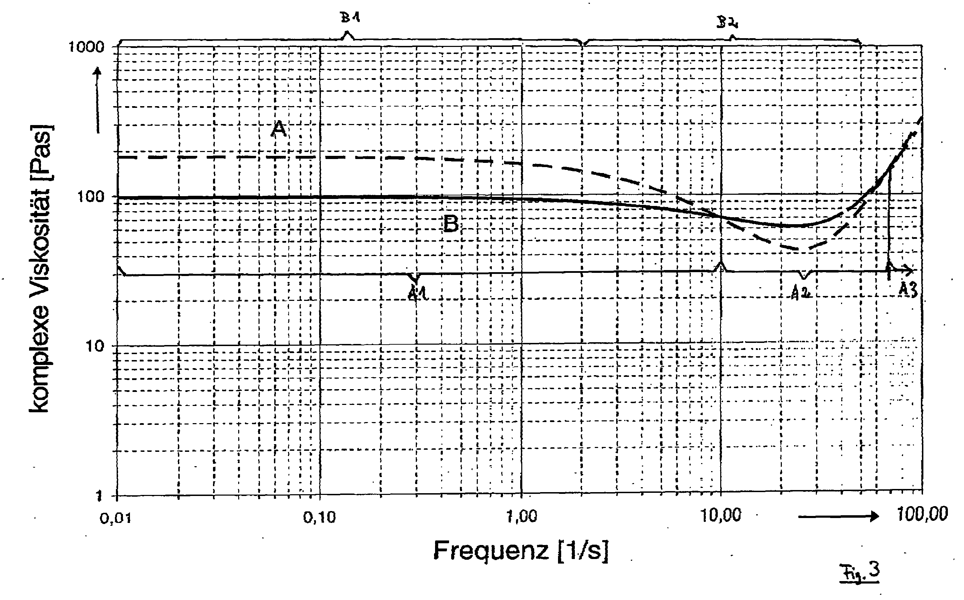

Der Verlauf der Viskosität für Polydimethylsiloxan in Abhängigkeit von der Anregungsfrequenz ist in Fig. 3 dargestellt und mit "B" bezeichnet. Der in Fig. 3 dargestellte Verlauf wurde in einem Rheometer ermittelt, gilt aber in entsprechender Weise für eine Anwendung des reinen Polydimethylsiloxans in dem Lager 10. Die Viskosität und eine entsprechende Dämpfung sind in einem ersten Frequenzbereich B1 hoch. In dem ersten Frequenzbereich B1 sollte die Eigenfrequenz der aufzulagemden Masse (1-Masse-Schwingermodell) liegen, sodass hier eine kleine Wegamplitude erzielt wird, s. Fig. 1. In einem zweiten Frequenzbereich B2, welcher höherfrequent ist als der erste Frequenzbereich B1, ist die Viskosität des Polydimethylsiloxans und eine entsprechende Dämpfung geringer als in dem ersten Frequenzbereich B1. Dadurch kann bei Frequenzverhältnissen über √2 (auch bei Auftreten strukturelastischer Schwingungen) ebenfalls eine Reduzierung der Wegamplitude erzielt werden.

Der mit B' bezeichnete Verlauf wurde anhand eines Lagers 10 mit reinem Polydimethylsiloxan als Dämpfungsflüssigkeit gemessen.

Wie dem Verlauf A in Fig. 3 zu entnehmen, wird für das erfindungsgemäße Lager 10 eine Dämpfungsflüssigkeit A derart definiert, dass diese in einem ersten Frequenzbereich A1 eine komplexe Viskosität aufweist, welche oberhalb der von reinem Polydimethylsiloxan liegt

Damit ergibt sich bei einer Anwendung der Dämpfungsflüssigkeit A in dem Lager 10, siehe Fig. 2, eine hohe Dämpfung bei niedrigen Anregungsfrequenzen, was vorteilhaft in einer kleinen Wegamplitude resultiert Mit niedrigen Anregungsfrequenzen sind insbesondere solche gemeint, welche ein Frequenzverhältnis kleiner √2 ergeben.

Ferner weist die Dämpfungsflüssigkeit A in einem zweiten Frequenzbereich A2 eine komplexe Viskosität auf, welche unterhalb der von Polydimethylsiloxan liegt. Der zweite Frequenzbereich A2 erstreckt sich beispielsweise von 10 bis 70 Hz. In dem zweiten Frequenzbereich weist die Dämpfungsflüssigkeit A beispielsweise eine Viskosität kleiner 100 Pas, bevorzugt kleiner 70 Pas und weiter bevorzugt kleiner 50 Pas auf.

Der vorstehend beschriebene Verlauf A für die Dämpfungsflüssigkeit A wurde mittels eines Rheometers ermittelt, gilt aber im Wesentlichen genauso, wenn diese bei dem Lager 10 als Dämpfungsflüssigkeit 15 verwendet wird.

Weiterhin kommen folgenden Aspekten Bedeutung zu:

In Vereinfachung kann die frequenzabhängige Dämpfungskonstante des Lagers als proportional der Viskosität des Fluides multipliziert mit einer Bezugslänge, korrigiert um weitere Einflußgrößen betrachtet werden. Diese weiteren Einflußgrößen sind insbesondere die Temperatur, die Nachgiebigkeit der das Fluidvolumen begrenzenden Lagerkomponenten, hier besonders die aus Elastomer gebildeten, die Unterteilung des Fluidvolumens in Teilvolumina durch konstruktive Maßnahmen, die Fluiddichte, aber auch die Anregungsamplitude.

Im Lager stellen sich bei dynamischer Betätigung benachbarte Volumenbereiche des Fluids mit voneinander verschiedenen Strömungsgeschwindigkeiten bzw. Frequenzen ein (Strömungsprofil). Dies hängt auch vom hydraulischen Übersetzungsverhältnis aus dem fluidtreibenden Querschnitt in Abhängigkeit von Auflager, Elastomerkörper, Traglager und dem Querschnitt des durchströmbaren Bereichs ab, z.B. Spalt zwischen Verdrängerscheibe und Gehäuse. Dieser Zusammenhang kann sich mehrfach im Lager finden.

Aufgrund dessen ergibt sich ein mittelbarer Zusammenhang zwischen dem Verlauf der komplexen Viskosität des Fluids A, ermittelt im Rheometer, zum Verlauf der spezifischen Dämpfarbeit des Lagers bei Betätigung in Lagerlängsachse, verbunden mit einer Relativbewegung zwischen Auflager und Traglager. Dieser Zusammenhang kann meßtechnisch ermittelt werden und basierend darauf auch mit geeigneten, angepassten Berechnungsmodellen. In Weiterentwicklung der gewonnenen Erkenntnisse kann so eine Spezifikation des Fluids abgeleitet werden, welche auf die Belange einer konkreten Applikation abgestimmt ist.

Die Umsetzbarkeit der Spezifikation in reale Fluide ergibt sich innerhalb bzw. mit den vorgemachten Angaben betreffend die Konstanten der Näherungsgleichung bzw. dem Verhältnis der komplexen Viskosität aus dem Bereich 1) zum Minimum innerhalb des Bereichs 2).

Im nachfolgenden soll der Einmassenschwinger bei harmonischer Krafterregung an der Masse bei Abstützung gegen ein starres Fundament betrachtet werden.

Wird hier die Amplitude der Bodenkraft bei vorhandener Dämpfung auf die Amplitude der Bodenkraft bei fehlender Dämpfung bezogen, über dem Dämpfungsgrad bei konstantem Verhältnis aus Anregungsfrequenz und Eigenkreisfrequenz des Einmassenschwingers aufgetragen, ergibt sich, dass mit zunehmendem Dämpfungsgrad dieses Verhältnis der Kräfte ansteigt. Dies erweitert den umfassenden Zielkonflikt, wenn ein Lager, mit gleicher Eigenschaft für die Fälle Stützenerregung (Wegamplitude) mit dem Ziel einer geringen Amplitudenüberhöhung an der Masse und Krafterregung an der aufgelagerten Masse mit dem Ziel einer geringen Bodenkraft eingesetzt werden soll. Aus diesem Kräfte-Verhältnis kann geschlossen werden, dass der Dämpfungsgrad kleiner 1 sein sollte, um akzeptable Bodenkraftamplituden zu erhalten. Die Aussagen zu den Proportionalitäten der Dämpfungskonstanten und der Eigenkreisfrequenz sind auch hier zutreffend.

Der zuständige Fachmann ist somit jederzeit in der Lage - unter Berücksichtigung der vorstehend definierten Parameter - die Dämpfungsflüssigkeit A herzustellen.

Selbstverständlich könnte die vorstehend definierte Dämpfungsflüssigkeit A auch bei einem hydraulischen Lager angewandt werden, welches eine andere Konstruktion aufweist als das Lager 10. Jedoch ist den hydraulischen Lagern, für welche die Dämpfungsflüssigkeit A geeignet ist, gemeinsam, dass bei diesen mehrere Teilvolumina gebildet sind, zwischen denen die Dämpfungsflüssigkeit A im Betrieb des jeweiligen Lagers mit unterschiedlichen Geschwindigkeiten strömt.

Obwohl die Erfindung vorliegend anhand bevorzugter Ausführungsbeispiele beschrieben wurde, ist sie darauf nicht beschränkt, sondern auf vielfältige Art und Weise modifizierbar. Insbesondere schließt "ein" keine Vielzahl aus,

**Patentansprüche**

1. Hydraulisch dämpfendes Lager (10), mit einer Dämpfungsflüssigkeit (15), welche eine komplexe Viskosität aufweist, die in einem ersten Frequenzbereich, in dem die Dämpfungsflüssigkeit (15) bei einer Betätigung des Lagers (10) angeregt wird, oberhalb der komplexen Viskosität von Polydimethylsiloxan und die in einem zweiten Frequenzbereich, in dem die Dämpfungsflüssigkeit (15) bei einer Betätigung des Lagers (10) angeregt wird, unterhalb der komplexen Viskosität von Polydimethylsiloxan liegt.

2. Lager nach Anspruch 1, **dadurch gekennzeichnet, dass** der zweite Frequenzbereich höherfrequenter ist als der erste Frequenzbereich.

3. Lager nach Anspruch 1 oder 2, **dadurch gekennzeichnet, dass** der erste Frequenzbereich Frequenzen zwischen 0 und 10 Hz und der zweite Frequenzbereich Frequenzen zwischen 10 und 70 Hz umfasst.

4. Lager nach einem der vorhergehenden Ansprüche, **dadurch gekennzeichnet, dass** die Dämpfungsflüssigkeit eine komplexe Viskosität aufweist, die in einem dritten Frequenzbereich, in dem diese bei einer Betätigung des Lagers (10) angeregt wird, oberhalb der komplexen Viskosität von Polydimethylsiloxan liegt.

5. Lager nach Anspruch 4, **dadurch gekennzeichnet, dass** der dritte Frequenzbereich höherfrequenter ist als der zweite Frequenzbereich.

6. Lager nach Anspruch 4 oder 5, **dadurch gekennzeichnet, dass** der dritte Frequenzbereich Frequenzen größer 70 Hz umfasst.

7. Lager nach einem der vorhergehenden Ansprüche, **dadurch gekennzeichnet, dass** die komplexe Viskosität in dem ersten Frequenzbereich größer 100 Pas, in dem zweiten Frequenzbereich kleiner 100 Pas und/oder in dem dritten Frequenzbereich größer 100 Pas beträgt.

8. Lager nach einem der vorhergehenden Ansprüche, **dadurch gekennzeichnet, dass** die Dämpfungsflüssigkeit eine komplexe Viskosität aufweist, welche sich bei doppelt logarithmischer Auftragung derselben wie folgt beschreiben lässt: ein Bereich konstanter komplexer Viskosität, Betragswert a, beginnend bei der Frequenz 0,01 Hz, gefolgt von einem zweiten Bereich geringerer komplexer Viskosität, Betragswert kleiner als a, mit einem ausgezeichneten Minimum, und weiter gefolgt von einem Bereich hoher komplexer Viskosität, Betragswert größer als a, bis zur Frequenz 100 Hz.

9. Lager nach einem der vorhergehenden Ansprüche, **dadurch gekennzeichnet, dass** die komplexe Viskosität η (f) beschrieben wird durch die Gleichung

$$\eta(f) = \frac{a}{(1 + b \cdot f)^c} + \frac{(1 + d \cdot f)^e}{g}$$

wobei a, b, c, d, e und g Konstanten und f die Anregungsfrequenz ist.

10. Lager nach Anspruch 9, **dadurch gekennzeichnet, dass** a zwischen 30 Pas und 4000 Pas, b größer 0, vorzugsweise zwischen 0,01 und 30, c größer oder gleich 0, vorzugsweise zwischen 0,1 und 5, d größer 0, vorzugsweise zwischen 1 und 10, e größer 0, vorzugsweise zwischen 0,01, und 30 und/oder g größer 0, vorzugsweise zwischen 0,1 und 10 beträgt.

11. Lager nach einem der vorhergehenden Ansprüche, **dadurch gekennzeichnet, dass** mehrere Teilvolumina gebildet sind, zwischen denen die Dämpfungsflüssigkeit (15) im Betrieb des Lagers (10) mit unterschiedlichen Geschwindigkeiten strömt.

12. Lager nach einem der vorhergehenden Ansprüche, **dadurch gekennzeichnet, dass** ein Auflager (11) und ein Traglager (13) mittels eines Federkörpers (12) miteinander verbunden sind, wobei zumindest der Federkörper (12) und eine Membran (16) einen mit der Dämpfungsflüssigkeit (15) befüllten Raum (14) begrenzen.

Fig. 1

Fig. 2

Fig. 3

EP 2 383 487 A1

| | Europäisches Patentamt European Patent Office Office européen des brevets | **EUROPÄISCHER RECHERCHENBERICHT** | **Nummer der Anmeldung** EP 10 00 4549 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 30 05 983 A1 (FREUDENBERG CARL FA [DE]) 20. August 1981 (1981-08-20) * Seite 9, Zeile 20 * ----- | 1-12 | INV. F16F13/06 |
| X | DE 10 2006 049938 A1 (TANASHIN DENKI CO [JP]) 26. April 2007 (2007-04-26) * Absatz [0037] * ----- | 1-12 | |
| X | WO 2008/031374 A1 (TAKATA PETRI AG [DE]; WEYRICH CHRISTIAN [DE]; BREUNINGER MARTIN [DE]) 20. März 2008 (2008-03-20) * Seite 9, Zeile 20 * ----- | 1-12 | |
| | | | RECHERCHIERTE SACHGEBIETE (IPC) |
| | | | F16F |

Der vorliegende Recherchenbericht wurde für alle Patentansprüche erstellt

| Recherchenort | Abschlußdatum der Recherche | Prüfer |
|---|---|---|
| Den Haag | 21. September 2010 | Beaumont, Arnaud |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 4549

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2010

| Im Recherchenbericht angeführtes Patentdokument | Datum der Veröffentlichung | Mitglied(er) der Patentfamilie | Datum der Veröffentlichung |
|---|---|---|---|
| DE 3005983 A1 | 20-08-1981 | KEINE | |
| DE 102006049938 A1 | 26-04-2007 | CN 1953094 A<br>JP 2007113622 A<br>KR 20070042865 A<br>US 2007089948 A1 | 25-04-2007<br>10-05-2007<br>24-04-2007<br>26-04-2007 |
| WO 2008031374 A1 | 20-03-2008 | DE 112006004132 A5 | 10-09-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2005021498 U1